# EUROPEAN PATENT APPLICATION

(11) **EP 4 516 556 A1**
(43) Date of publication of application: **05.03.2025**
(21) Application number: 23796422.6
(22) Date of filing: 26.04.2023
(51) Int. Cl.: B60K 35/00, G02B 27/01

(54) **DISPLAY CONTROL DEVICE, HEAD-UP DISPLAY DEVICE, AND DISPLAY CONTROL METHOD**

(30) Priority: 27.04.2022 JP 2022073589
(71) Applicant: Nippon Seiki Co., Ltd., Nagaoka-shi, Niigata 940-8580 (JP)
(72) Inventor: HONMA, Hanako, Nagaoka (JP)
(74) Representative: Carpmaels & Ransford LLP
(86) International application number: PCT/JP2023/016429
(87) International publication number: WO 2023/210682

(57) **Abstract**

The present invention makes it easier to recognize relevant information even when a display position of content is changed to a different separate display region. A first display unit 110 displays a first display image IM10 in a first display region 101, a second display unit 120 displays a second display image Im20 in a second display region 102 disposed closer than the first display region 101, and a processor executes display position change processing for moving predetermined content between the first display region 101 and the second display region 102. The first display unit 110 displays the first display image IM10 that is an overhead image of the content as viewed obliquely and downwardly, and the second display unit 120 displays the second display image IM20 at a tilt angle θ greater than that of the first display image IM10.

## Description

### TECHNICAL FIELD

The present disclosure relates to a display control device, a head-up display device, and a display control method that are employed in a vehicle and cause an image to be visually recognized by superimposing the image on front scenery ahead of the vehicle.

### BACKGROUND ART

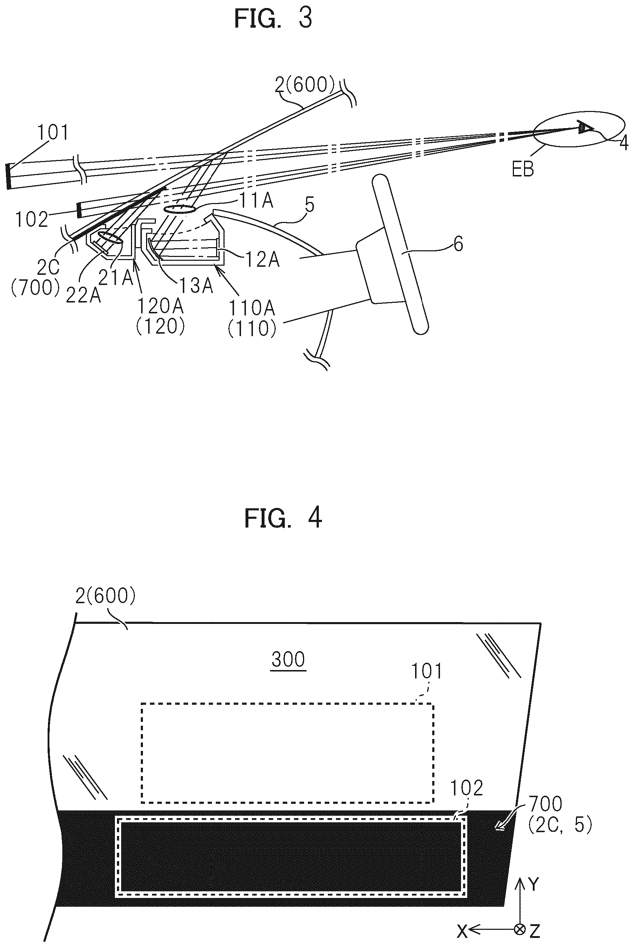

Patent Document 1 discloses a display device which stops display of a guide route image V1a that has been displayed in a faraway display region E1 far from an observer, and displays an auxiliary virtual image V3 related to the guide route image V1a in a nearby display region E2 near the observer. That is, pieces of related information are switched between different display regions separated from each other and displayed as content in different forms. As described above, the switching of a display position of the content of the related information between the separated different display regions is performed in order to, for example, reduce annoyance or attract attention to the contrary, or to cause the information to be visually recognized at an appropriate timing, and/or reduce a driving load, in accordance with a traveling environment of a vehicle or the state of the driver (for example, [0014], [0015], [0036], and Figs. 3 and 4).

### PRIOR ART DOCUMENT

### PATENT DOCUMENT

Patent Document 1: JP 2014-213763 A

### SUMMARY OF THE INVENTION

### PROBLEMS TO BE SOLVED BY THE INVENTION

In Patent Document 1, the display regions are separated from each other at different distances from the observer. Thus, even if content is switched and the content indicating the same information is displayed, it is difficult for the observer to recognize that the content has the same information. In addition, in particular, as in Patent Document 1, in a case where content is displayed as pieces of content in different forms between a first display region (the faraway display region E1) and a second display region (the nearby display region E2), the pieces of content are even more difficult to be recognized as being the same information. Therefore, Patent Document 1 leaves room for improvement.

Further, in Patent Document 1, while the content (the guide route image V1a) displayed in the first display region (the faraway display region E1) is represented such that the content is inclined with respect to a line-of-sight axis of the observer facing the front and is along a road surface, the content (the auxiliary virtual image V3) displayed in the second display region (the nearby display region E2) is represented such that the content is directly opposed to the line-of-sight axis of the observer facing the front. Therefore, when the display region is changed, the spatial inclination representation of the content is to change. However, in Patent Document 1, the observer is not given the impression of such a difference in the spatial inclination representation of the content. Therefore, it is assumed that the impressions about a change in the spatial inclination representation of the content, the spatial inclination representation itself of the content before the display region is changed, and the spatial inclination representation itself of the content after the display region is changed are weak, and Patent Document 1 leaves room for improvement.

### SOLUTION TO PROBLEM

A summary of specific embodiments disclosed in the present specification is provided below. It should be understood that these aspects are presented merely to provide a reader with a brief summary of these specific embodiments and that these aspects are not intended to limit the scope of the present disclosure. Indeed, the present disclosure may include various aspects that are not set forth below.

A brief summary of the present disclosure relates to enabling content to be easily recognized as being the related information even when a display position of the content is changed to a different separated display region. More specifically, the brief summary relates to enabling the content to be easily recognized as being the related information even when a display position of the content is changed to a different separated display region by switching the content to content in a different form. Also, the brief summary relates to making an impression on the observer about a difference in the spatial arrangement of the content.

Therefore, in order to solve the above-described problems, the display control device, the head-up display device, and the display control method, etc., described in the present specification adopt the following measures. In the present embodiment, the gist is that a first display unit displays a first display image in a first display region; a second display unit displays a second display image in a second display region disposed nearer than the first display region; a processor executes display position change processing of moving predetermined content between the first display region and the second display region; the first display unit is made to display the first display image, which is an overhead image of the content as viewed obliquely downward; and the second display unit is made to display the second display image in which a depression angle is greater than a depression angle of the first display image.

Therefore, according to a display control device of a first embodiment described in the present specification, in a display control device which controls a vehicular display system provided with a first display unit which displays an image in a first display region, and a second display region which displays an image in a second display region disposed nearer than the first display region, a processor executes display position change processing of moving predetermined content between the first display region and the second display region, the first display unit displays a first display image, which is an overhead image of the content as viewed obliquely downward, and the second display unit displays a second display image in which a depression angle is greater than a depression angle of the first display image. According to this feature, since the depression angle of the content is varied in accordance with the display position change processing of moving the content, it is possible to assume an advantage of being able to make an impression about a change in the spatial arrangement of the content. In the display control device according to the first embodiment, the first display image in which a depression angle is small is displayed on the first display unit far from an observer, and the second display image which is the same content as the first display image and in which a depression angle is large is displayed on the second display region near the observer. It is possible to make an impression of there being a difference between the distances (image distances) displayed by such a change in the depression angle in an emphasized way. Further, conversely, also by such a change in the image distance, it is possible to make an impression of there being a difference between the depression angles of the content in an emphasized way.

In a display control device according to a second embodiment which may be dependent on the first embodiment, the processor executes, in the display position change processing, at least one of gradually increasing the depression angle when moving the content from the first display region to the second display region and gradually decreasing the depression angle when moving the content from the second display region to the first display region. In the display control device according to the second embodiment, while gradually increasing the depression angle, the content which has been displayed in the first display region is moved toward a predetermined second display position in the second display region where an image distance is short. Consequently, it is possible to assume an advantage of being able to give the impression that the content has come close to the near side in an emphasized way. Also, in the display control device according to the second embodiment, while gradually decreasing the depression angle, the content which has been displayed in the second display region is moved toward a predetermined first display position in the first display region where an image distance is long. Consequently, it is possible to assume an advantage of being able to give the impression that the content has moved away to the far side in an emphasized way.

In a display control device according to a third embodiment which may be dependent on the first or second embodiment, the processor gradually changes, at a movement source, the depression angle in the display position change processing.

In a display control device according to a fourth embodiment which may be dependent on the first to third embodiments, in the display position change processing, the processor gradually changes, at the movement source, the depression angle while moving the content to a movement destination side. In the display control device according to the fourth embodiment, the content, which has been displayed in the first display region, moves toward the second display region where the image distance is short with the depression angle being gradually increased, and is finally displayed at the predetermined second display position in the second display region where the image distance is short. Therefore, it is possible to assume an advantage of being able to give the impression that the content has come close to the near side in an emphasized way even when the content is in the process of making a move in the first display region. Further, in the display control device according to the fourth embodiment, the content, which has been displayed in the second display region, moves toward the first display region where the image distance is long with the depression angle being gradually decreased, and is finally displayed at the predetermined first display position in the first display region where the image distance is long. Therefore, it is possible to assume an advantage of being able to give the impression that the content is moving away to the far side in an emphasized way even when the content is in the process of making a move in the second display region.

In a display control device according to a fifth embodiment which may be dependent on the third or fourth embodiment, at the movement destination, while the processor allows the content to be moved from the movement source side, the processor does not change the depression angle in the display position change processing. In the display device according to the third or fourth embodiment, by virtue of the change in the depression angle and the movement of the display position of the content at the movement source, it is possible to give the impression that the image distance of the content is changing in an emphasized way, and it is also possible to make an impression of there being a change in the depression angle of the content in an emphasized way. For this reason, a change of the depression angle of the content at the movement destination is not necessarily required. Therefore, in the display control device according to the fifth embodiment, it is possible to assume an advantage of being able to reduce a change of the depression angle at the movement destination, which may be a redundant expression at the movement source, and reduce a control load.

In a display control device according to a sixth embodiment which may be dependent on the first or fifth embodiment, the processor executes, in the display position change processing, at least one of reducing the content at the movement source if the size of the content at the movement destination is smaller than the size of the content at the movement source, and enlarging the content at the movement source if the size of the content at the movement destination is larger than the size of the content at the movement source. In a case where the size of the content differs greatly between the movement source and the movement destination, a large difference is caused in the size of the content to be visually recognized when the display unit on which the content is displayed is switched. Thus, it is presumed that the switched content is hard to be recognized as being the same content. In the display control device according to the sixth embodiment, the size of the content is enlarged or reduced at the movement source such that the size becomes close to that of the content at the movement destination. By such enlargement or reduction, it is possible to assume an advantage of eliminating (or reducing) a difference in the size of the content to be visually recognized which is presumed to occur at the time when the display unit on which the content is displayed is switched.

In a display control device according to a seventh embodiment which may be dependent on the first or sixth embodiment, in the display position change processing, the processor changes, at the movement source, the content in a form which becomes gradually invisible from an end portion of the content on the movement destination side. In the display control device according to the seventh embodiment, by changing the content in a form which becomes gradually invisible from the end portion of the content on the movement destination side in a state in which the content is stopped (is not moving), it is also possible to assume an advantage of being able to cause the observer to perceive that the content has moved to the movement destination even without moving the content. Further, in the display control device according to the seventh embodiment, with the content moving toward the movement destination, by changing the content in a form which becomes gradually invisible from the end portion of the content on the movement destination side, it is also possible to assume an advantage of being able to cause the observer to perceive that the content is moving in an emphasized way.

In a display control device according to an eighth embodiment which may be dependent on the first or seventh embodiment, the content included in the first display image is a part of the content included in the second display image. When a display position of the content is switched between the first display region and the second display region, the display control device according to the eighth embodiment increases or decreases the amount of information of the content. By doing so, it is possible to adjust the amount of information and attractiveness of an image, and it is assumed that the convenience is enhanced.

In a display control device according to a ninth embodiment which may be dependent on the first or eighth embodiment, the first display image is a 3D representation and the second display image is a 2D representation. As the display control device according to the ninth embodiment switches a method of representation between the 3D representation and the 2D representation, a change in the depression angle with respect to the content is further emphasized. It is possible to make an impression of there being a difference between the distances (image distances), which are displayed by such an emphasis on the change in the depression angle, in an emphasized way.

In a display control device according to a tenth embodiment which may be dependent on the first or ninth embodiment, the first display image has a predetermined first depth representation, and the second display image does not have the first depth representation. The display control device according to the tenth embodiment switches the method of representation between an image having the first depth representation and an image not having the first depth representation, whereby a change in the depression angle with respect to the content is further emphasized. It is possible to make an impression of there being a difference between the distances (image distances), which are displayed by such an emphasis on the change in the depression angle, in an emphasized way.

### BRIEF DESCRIPTION OF THE DRAWINGS

Fig. 1 is a diagram illustrating a display mode of a first display image and a second display image, which are visually recognized by an observer (typically, a driver of a vehicle) when he/she faces the front from a driver's seat in the vehicle.
Fig. 2 is a diagram illustrating an example of the arrangement of a first display region and a second display region.
Fig. 3 is a diagram illustrating an example of the arrangement of a second display unit.
Fig. 4 is a diagram illustrating one embodiment of the arrangement of the first display region and the second display region.
Fig. 5A is a diagram illustrating the state in which the first display image is displayed in the first display region.
Fig. 5B is a diagram illustrating the state in which the second display image is displayed in the second display region.
Fig. 6 is a block diagram of a vehicular display system according to some embodiments.
Fig. 7 is a diagram illustrating a region of a map image of the surroundings of a host vehicle displayed as an overhead navigation image.
Fig. 8 is a diagram illustrating virtual viewpoints having different depression angles with respect to a predetermined virtual object (content).
Fig. 9A is a diagram illustrating a virtual object (content) 800 as seen from a virtual viewpoint MM1 (depression angle θ1) of Fig. 8 (the right figure), and a navigation image IM31 (the left figure).
Fig. 9B is a diagram illustrating a virtual object (content) 800 as seen from a virtual viewpoint MM2 (depression angle θ2) of Fig. 8 (the right figure), and a navigation image IM32 (the left figure).
Fig. 9C is a diagram illustrating a virtual object (content) 800 as seen from the virtual viewpoint MM3 (depression angle θ3) of Fig. 8 (the right figure), and a navigation image IM33 (the left figure).
Fig. 10 is a diagram illustrating one embodiment of transition of a display image in display position change processing executed by a display control device.
Fig. 11 is a diagram illustrating one embodiment of transition of a display image in display position change processing executed by a display control device.
Fig. 12 is a diagram for describing display transition of content.
Fig. 13 is a diagram illustrating a display mode of a first display image (upper diagram) and a second display image (lower diagram).
Fig. 14 is a diagram illustrating one embodiment of transition of a display image in display position change processing executed by a display control device 130.
Fig. 15 is a diagram illustrating an example of the arrangement of a second display unit.
Fig. 16 is a diagram illustrating an example of the arrangement of a second display unit.

### MODE FOR CARRYING OUT THE INVENTION

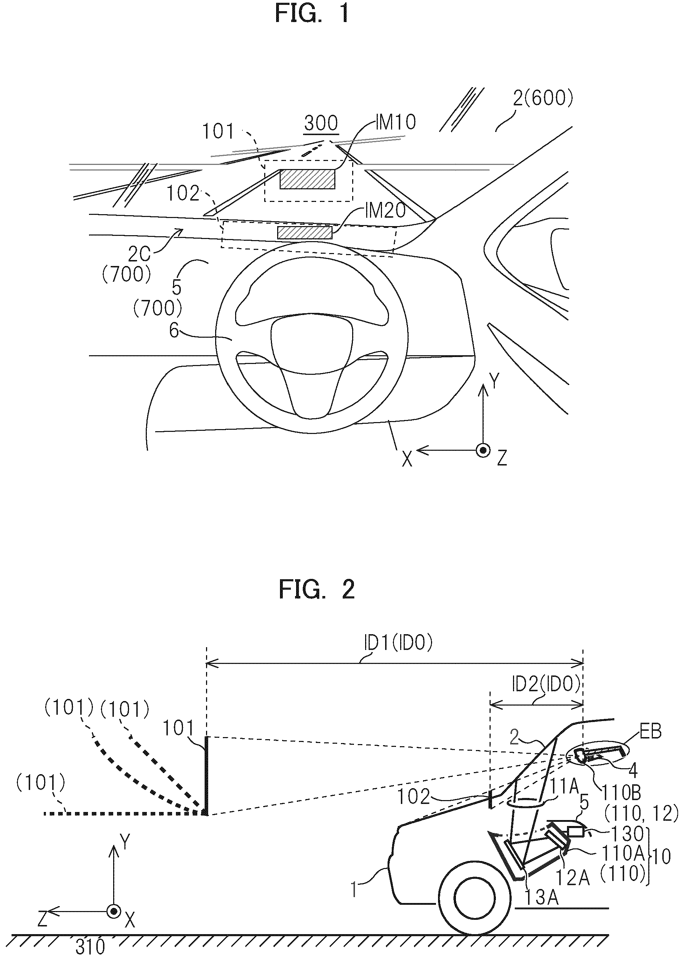

In the following, descriptions of a configuration of an exemplary vehicular display system will be provided with reference to Figs. 1 to 14. It should be noted that the present invention is not limited to the embodiments below (including the contents of the drawings). It is of course possible to make changes (including deletion of constituent elements) to the embodiments described below. Moreover, in the following descriptions, a description of known technical matters will be omitted as appropriate to facilitate understanding of the present invention.

Fig. 1 is a diagram illustrating a display mode of a first display image IM10 and a second display image IM20, which are visually recognized by an observer (typically, a driver of a vehicle) 4 when he/she faces the front from a driver's seat in a vehicle 1. In the description of the present embodiment, it is assumed that a left-right direction defined when the observer 4 who is seated in the driver's seat in the vehicle 1 faces the front of the vehicle 1 corresponds to the X-axis (the left direction is the X-axis positive direction), an up-down direction corresponds to the Y-axis (the up direction is the Y-axis positive direction), and a front-rear direction corresponds to the Z-axis (the front direction is the Z-axis positive direction). A vehicular display system 10 of the present embodiment displays the first display image IM10 in a first display region 101 within a front scenery overlapping region 600, which is visually recognized to overlap front scenery 300 that is ahead of the vehicle 1, and displays the second display image IM20 in a second display region 102 within a front scenery non-overlapping region 700, which is visually recognized not to overlap the front scenery 300 that is ahead of the vehicle 1.

A first display unit 110 displays the first display image IM10 in the first display region 101. The first display region 101 is provided in a region (an example of the front scenery overlapping region 600) overlapping a front windshield 2 of the vehicle 1 when viewed from the observer 4. The first display unit 110 of one embodiment of the vehicular display system 10 is a head-up display (HUD) device 110A provided within a dashboard 5 of the vehicle 1. The HUD device 110A emits display light 11A toward the front windshield 2 (i.e., an example of a projected member), and causes the first display image IM10 to be visually recognized in the first display region 101 on the front side (i.e., in the Z-axis positive direction) of the front windshield 2 (an example of the projected member). By virtue of this feature, the observer 4 can visually recognize an image superimposed on the front scenery 300, which is a real space visually recognized through the front windshield 2.

Fig. 2 is a diagram illustrating an example of the arrangement of the first display region 101 and the second display region 102. The first display region 101 is an area of a flat surface, a curved surface, or a partially curved surface on which an image generated within the HUD device 110A is formed as a virtual image, and is also referred to as an image forming surface. The first display region 101 itself is not actually visually recognized by the observer 4, or visibility thereof is so low that it is hard to be visually recognized.

The HUD device 110A includes a display 12A having a display surface which displays an image, and a relay optical system 13A. The display 12A may be a transmissive display that transmits light from a backlight, such as a liquid crystal display (LCD), or may be a projection display that projects an image onto a screen. In this case, the display surface is a display surface of the transmissive display or the screen of the projection display.

The relay optical system 13A is disposed on an optical path of light of an image from the display 12A that is between the display 12A and the front windshield 2, and is configured from one or more optical members which project the light of the image from the display 12A onto the front windshield 2 on the outside of the first display unit 110. While the relay optical system 13A includes at least one concave mirror, the relay optical system 13A may include, for example, one or more refractive optical members such as a lens, diffractive optical members such as a hologram, and reflective optical members, or a combination thereof, in addition to the concave mirror.

Further, the first display unit 110 may be a head-mounted display (hereinafter referred to as an HMD) device 110B. As the observer 4 wears the HMD device 110B on the head and sits on a seat of the vehicle 1, he/she visually recognizes a displayed image to be superimposed on the front scenery 300 through the front windshield 2 of the vehicle 1. The first display region 101 in which the vehicular display system 10 displays a predetermined image is fixed (or adjustably arranged) at a specific position with reference to the coordinate system of the vehicle 1, and as the observer 4 faces toward that direction, he/she can visually recognize the image displayed in the first display region 101 fixed at the specific position.

On the basis of control by a display control device 30, the first display unit 110 displays an image in the vicinity of a real object (an example of a specific positional relationship between the image and the real object) in which the real object is, for example, an obstacle (a pedestrian, a bicycle, a motorcycle, other vehicles, or the like), a road surface 6 of a traffic lane, a road sign, and a ground object (a building, a bridge, or the like) being existent in the front scenery 300, which is the real space (an actual view) visually recognized through the front windshield 2 of the vehicle 1, or displays an image at a position overlapping the real object (an example of a specific positional relationship between the image and the real object) or at a position set with reference to the real object (an example of a specific positional relationship between the image and the real object). By doing so, a viewer (typically, the observer 4 who is seated in the driver's seat in the vehicle 1) can be made to perceive visual augmented reality (AR). The first display unit 110 can display images including an AR image whose display position is changed in accordance with the position of the real object and/or a non-AR image whose display position is not changed in accordance with the position of the real object.

As indicated in Fig. 2, the first display region 101 is disposed at a position separated from a predetermined position in the vehicle 1 (for example, a predetermined position of an eyebox EB) by a first image distance ID1. The second display region 102 is disposed at a position separated by a second image distance ID2 shorter than the first image distance ID1. That is, the second display image IM20 displayed by the second display unit 120 is visually recognized by the observer 4 on the near side relative to the first display image IM10 that is displayed by the first display unit 110. The first image distance ID1 is, for example, 7 meters [m], and the second image distance ID2 is, for example, 2 meters [m]. However, these values are merely examples and can be changed.

Further, in a case where the upper end of the first display region 101 as seen from the observer 4 is disposed farther than the lower end of the same and is disposed along a road surface 310 (i.e., the first display regions 101 indicated by a dotted line in Fig. 2), the distance (image distance) ID1 from the predetermined position in the vehicle 1 to the first display region 101 may be 3 to 20 meters [m]. That is, the image distance ID1 to the near end (the lower end) of the first display region 101 may be 3 meters [m], and the image distance ID1 to the far end (the upper end) of the first display region 101 may be 20 meters [m].

Fig. 3 is a diagram illustrating an example of the arrangement of the second display unit 120. The second display unit 120 of one embodiment of the vehicular display system 10 is a nearby HUD device 120A provided within the dashboard 5 of the vehicle 1. The nearby HUD device 120A emits the display light 11A toward a W/S light-shielding portion 2C (i.e., an example of a light-shielding portion 700) of the front windshield 2 (i.e., an example of a projected member), and causes the second display image IM20 to be visually recognized in the second display region 102 on the front side (i.e., in the Z-axis positive direction) of the front windshield 2 (an example of the projected member). By virtue of this feature, the observer 4 can visually recognize an image that is not superimposed on the front scenery 300, which is the real space.

The nearby HUD device 120A includes a display 22A having a display surface which displays an image. An optical path length of the display light 21A from the display 22A of the nearby HUD device 120A to a projected portion (the W/S light-shielding portion 2C) is set to be shorter than the optical path length of the display light 11A from the display 12A of the HUD device 110A to the projected portion (the W/S light-shielding portion 2C). That is, the second display image IM20 displayed by the nearby HUD device 120A is perceived by an observer 3 to be closer than the first display image IM10 that is displayed by the HUD device 110A. In other words, the second display region 102 is disposed closer to the driver's seat in the vehicle 1 than the first display region 101. The nearby HUD device 120A may also include a relay optical system (not illustrated).

Fig. 4 is a diagram illustrating one embodiment of the arrangement of the first display region 101 and the second display region 102. The first display region 101 is the region (front scenery overlapping region) 600 in which the front scenery (actual view) 300 can be visually recognized by transmitting visible light at the front windshield 2, and is, for example, within a display region of the HUD device 110A (the first display unit 110). Meanwhile, the second display region 102 is the region (front scenery non-overlapping region) 700 that does not overlap the front scenery (actual view) 300 beyond the front windshield 2, and is, for example, a region that overlaps the W/S light-shielding portion 2C (an example of the light-shielding portion 700) of the front windshield 2 or the dashboard 5 (an example of the light-shielding portion 700). In a broad sense, it is sufficient if the second display region 102 is, for the most part, within a region not overlapping the actual view beyond the front windshield 2. That is, a part of the second display region 102 (e.g., less than 30% of the second display region 102) may be outside the region not overlapping the actual view beyond the front windshield 2 (in other words, within a region overlapping the actual view beyond the front windshield 2).

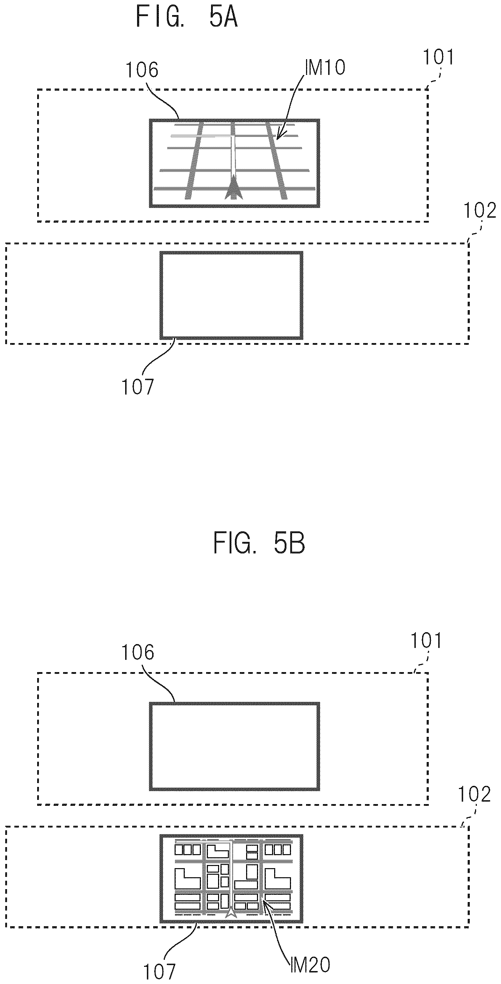

Fig. 5A is a diagram illustrating the state in which the first display image IM10 is displayed in the first display region 101. The first display image IM10 is an overhead image of content as viewed obliquely downward, and is displayed at a predetermined first fixed position 106 in the first display region 101.

Fig. 5B is a diagram illustrating the state in which the second display image IM20 is displayed in the second display region 102. The second display image IM20 is an image in which a depression angle is greater than that of the first display image IM10, and is displayed at a predetermined second fixed position 107 in the second display region 102.

The vehicular display system 10 (the display control device 130) according to the present embodiment executes display position change processing of moving the content between the first display region 101 (the first fixed position 106) and the second display region 102 (the second fixed position 107).

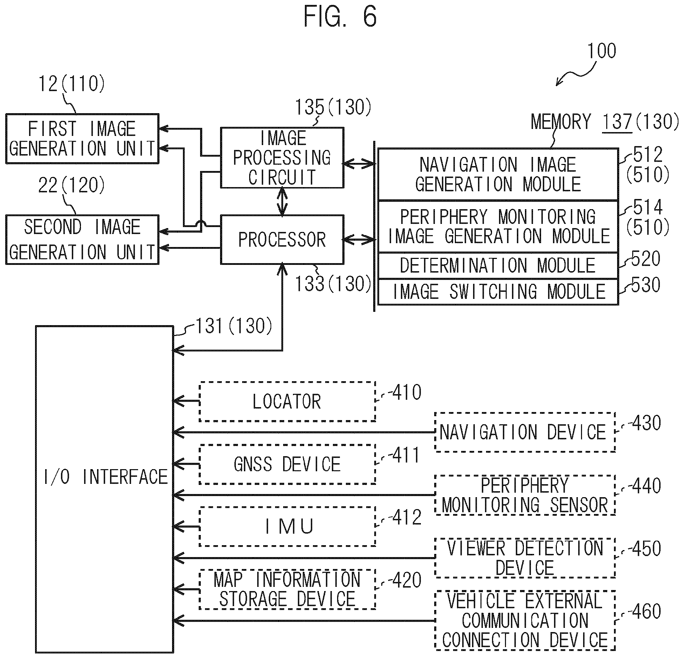

Fig. 6 is a block diagram of the vehicular display system 10 according to some embodiments. The display control device 130 includes one or more input/output (I/O) interfaces 131, one or more processors 133, one or more image processing circuits 135, and one or more memories 137. Various functional blocks illustrated in Fig. 6 may be configured by hardware, software, or a combination of both. Fig. 6 is merely one embodiment of the embodiments, and the constituent elements illustrated may be combined into fewer constituent elements, or additional constituent elements may be provided. For example, the image processing circuit 135 (e.g., a graphics processing unit) may be included in the one or more processors 133.

As illustrated in the drawing, the processor 133 and the image processing circuit 135 are operably coupled to the memory 137. More specifically, as the processor 133 and the image processing circuit 135 execute a program stored in the memory 137, an operation of the vehicular display system 10, such as generating and/or transmitting image data, can be performed. The processor 133 and/or the image processing circuit 135 may include at least one general-purpose microprocessor (e.g., a central processing unit (CPU)), at least one application-specific integrated circuit (ASIC), at least one field programmable gate array (FPGA), or an arbitrary combination of the above. The memory 137 includes an arbitrary type of magnetic medium such as a hard disk, an arbitrary type of optical medium such as a compact disc (CD) or a digital versatile disc (DVD), an arbitrary type of semiconductor memory such as a volatile memory, and a non-volatile memory. The volatile memory may include a dynamic random access memory (DRAM) and a static random access memory (SRAM), and the non-volatile memory may include a read-only memory (ROM) and a nonvolatile read-only memory (NVROM).

As illustrated in the drawing, the processor 133 is operably coupled to the I/O interface 131. The I/O interface 131 performs, in accordance with controller area network (CAN) standard, communication (also referred to as CAN communication) with, for example, a vehicle electronic control unit (ECU) to be described later provided in the vehicle, and other electronic devices (indicated by reference numerals 401 to 420 to be described later). Note that the communication standard adopted by the I/O interface 131 is not limited to CAN, and includes, for example, a wired communication interface such as a CAN with Flexible Data Rate (CANFD), a Local Interconnect Network (LIN), Ethernet (registered trademark), a Media Oriented Systems Transport (MOST) (MOST is a registered trademark), a Universal Asynchronous Receiver Transmitter (UART), or a Universal Serial Bus (USB), or an in-vehicle communication (interior communication) interface, which is an interface of short-range wireless communication within several tens of meters, including, for example, a personal area network (PAN) such as Bluetooth (registered trademark) network, and a local-area network (LAN) such as 802.11x Wi-Fi (registered trademark) network. Moreover, the I/O interface 131 may include a vehicle external communication (exterior communication) interface such as a wide-area communication network (e.g., Internet communication network) according to a cellular communication standard, such as wireless wide area network (WAN0, IEEE802.16-2004 (Worldwide Interoperability for Microwave Access (WiMAX)), IEEE802.16e Base (Mobile WiMAX), 4G, 4G-LTE, LTE Advanced, and 5G.

As illustrated in the drawing, as the processor 133 is coupled to the I/O interface 131 in a mutually operable manner, the processor 133 is enabled to exchange information with various other electronic devices and the like connected to the vehicular display system 10 (the I/O interface 131). For example, a navigation device, the vehicle ECU, and a vehicle external communication device, etc., that are provided in the host vehicle 1 are operably coupled to the I/O interface 131. A first image generation unit 12 and a second image generation unit 22 are operably coupled to the processor 133 and the image processing circuit 135. Accordingly, the first display image IM1 displayed by the first display unit 110 and the second display image IM2 displayed by the second display unit 120 may be based on image date received from the processor 133 and/or the image processing circuit 135. The processor 133 and the image processing circuit 135 control the first display image IM10 displayed by the first display unit 110 and the second display image IM20 displayed by the second display unit 120 on the basis of information obtained from the I/O interface 131. Note that the I/O interface 131 may include the function of processing (converting, computing, and analyzing) information received from other electronic devices or the like connected to the vehicular display system 10.

A locator 410 illustrated in Fig. 6 is configured to mainly include a microcomputer provided with a processor, a RAM, a storage unit, an input/output interface, and a bus connecting these components, etc. The locator 410 combines positioning data received by a Global Navigation Satellite System (GNSS) device 411, a measurement result of an Inertial Measurement Unit (IMU) 412, and vehicle speed information and the like that has been output to the I/O interface 131, and sequentially measures the position of the vehicle of its own and a traveling direction or the like of the host vehicle 1. The locator 410 provides, to the display control device 130 and the like, positional information and direction information regarding the host vehicle 1 based on the position measurement result.

The GNSS device 411 illustrated in Fig. 6 receives a positioning signal transmitted from an artificial satellite (a positioning satellite), detects the current position of the host vehicle, and outputs the detected position data to the locator 410. The GNSS device 411 can receive a positioning signal from each of the positioning satellites of at least one satellite positioning system among the satellite positioning systems such as global positioning system (GPS), global navigation satellite system (GLONASS), Galileo, Indian Regional Navigational Satellite System (IRNSS), quasi-zenith satellite system (QZSS), and Beidou.

The IMU 412 is an Inertial Measurement Unit and includes, for example, a gyroscope sensor and an acceleration sensor, and the IMU 412 detects angular velocities in each of yaw, pitch, and roll directions and outputs the detected angular velocity data to the locator 410. As the locator 410 detects the angular velocities in each of the yaw, pitch, and roll directions, a change in the posture of the vehicle is detected.

A map information storage device 420 is a storage medium which stores map data including the periphery of the vehicle, and outputs, to the display control device 130, the map data of the periphery of the current position of the host vehicle on the basis of the positional information and the direction information regarding the host vehicle 1 that have been determined by the locator 410. Further, the map information storage device 420 outputs, to the display control device 130, a relative position (distance and direction) of a specific target (a feature point such as a building or a branching point on a road) on the basis of the positional information and the direction information regarding the host vehicle 1 that have been determined by the locator 410. Fig. 6 illustrates an example in which the map information storage device 420 is externally attached to the display control device 130. However, the map information storage device 420 may be incorporated in the display control device 130. Further, the map information storage device 420 may be a server which distributes map information to the display control device 130 by means of communication from the outside of the host vehicle. The map information storage device 420 can acquire the latest map data from a server provided on the cloud.

A navigation device 430 is a vehicle onboard unit which performs route guidance to a destination set by a driver, for example. The navigation device 430 is provided with a map database (not illustrated) for navigation. The map database for navigation is constituted by mainly using a non-volatile memory, and stores therein map data (hereinafter referred to as navigation map data) used for route guidance. The navigation map data indicates link data and node data, etc., regarding the roads. The navigation device 430 provides navigation information indicating the contents of the route guidance to the display control device 130. The navigation information includes, for example, positional information and road shape information regarding an intersection or a junction point, and directional information indicating the direction in which the vehicle should proceed at the intersection or the junction point.

The periphery monitoring sensor 440 detects a specific target that exists at the periphery (the front, the side, and the rear) of the vehicle 1. The specific target detected by the periphery monitoring sensor 440 may include, for example, an obstacle (a pedestrian, a bicycle, a motorcycle, other vehicles, or the like), a road surface of a traffic lane which will be described later, a mark line, a roadside object, and/or a ground object (a building or the like). A vehicle external sensor is constituted of, for example, a detection unit configured from a radar sensor such as a millimeter-wave radar, an ultrasonic radar, or a laser radar, a camera, or an arbitrary combination of the above, and a processing device which processes detection data (i.e., fuses data) from one or more of the detection units. For detection of objects by the radar sensor or a camera sensor, a conventional well-known technique is applied. By the detection of objects by these sensors, the presence or absence of a specific target in a three-dimensional space may be detected, and if there exists a specific target, the position of the specific target (i.e., a relative distance from the vehicle 1, the position in the left-right direction when the traveling direction of the vehicle 1 is assumed as the front-rear direction, the position in the up-down direction, etc.) and the size (size in a transverse direction (left-right direction) and a height direction (up-down direction), etc.), a moving direction (the transverse direction (left-right direction) and a depth direction (front-rear direction)), a change rate (in the transverse direction (left-right direction) and the depth direction (front-rear direction)) of the specific target and/or the type of the specific target and the like may be detected. One or more of the periphery monitoring sensors 440 can detect a specific target ahead of the vehicle 1 for each detection cycle of the respective sensors, and output, to the processor 133, specific target information (the presence or absence of the specific target and if there exists a specific target, information such as the position, size, and/or type of the specific target for each specific target), which is an example of the specific target information. These pieces of specific target information may be transmitted to the processor 133 via another device (e.g., the vehicle ECU). Further, when a camera is used as the sensor, an infrared camera or a near-infrared camera should preferably be used so that the specific target may be detected even when the surroundings are dark, such as at night. Furthermore, when a camera is used as the sensor, a stereo camera capable of acquiring a distance and the like by a parallax is preferred.

A viewer detection device 450 may include a camera such as an infrared camera which detects the eye position of the observer who is seated in the driver's seat in the vehicle 1 and may output a captured image to the processor 133. The processor 133 may acquire a captured image (an example of information from which the eye position can be estimated) from the viewer detection device 450, and analyze the captured image by a method such as pattern matching, thereby detecting the coordinates of the eye position of the observer, and outputting a signal indicating the detected coordinates of the eye position to the processor 133.

Further, the viewer detection device 450 may output, to the processor 133, an analysis result obtained by analyzing the captured image of the camera (e.g., a signal indicating where the eye position of the observer belongs to in a spatial area to which a plurality of preset display parameters correspond). The method of acquiring the eye position of the observer of the vehicle 1 or the information from which the eye position of the observer can be estimated is not limited to these methods. The eye position or the information may be acquired by using a known eye position detection (estimation) technique.

Furthermore, the viewer detection device 450 may detect a change rate and/or a moving direction of the eye position of the observer and output, to the processor 133, a signal indicating the change rate and/or the moving direction of the eye position of the observer.

A vehicle external communication connection device 460 is a communication device which exchanges information with the host vehicle 1, and is, for example, other vehicles connected to the host vehicle 1 by vehicle-to-vehicle (V2V) communication, pedestrians (portable information terminals carried by pedestrians) connected by vehicle-to-pedestrian (V2P) communication, and network communication devices connected by vehicle-to-roadside Infrastructure (V2I) communication. In a broad sense, the vehicle external communication connection device 460 includes everything connected by vehicle-to-everything (V2X) communication with the host vehicle 1. The vehicle external communication connection device 460 may acquire, for example, the position of a pedestrian, a bicycle, a motorcycle, other vehicles (a preceding vehicle, etc.), a road surface, a mark line, a roadside object, and/or a ground object (a building, etc.) and transmit the acquired position to the processor 133. Furthermore, the vehicle external communication connection device 460 may have the same function as that of the locator 410 described above, and transmit the positional information and the direction information regarding the host vehicle 1 to the display control device 130 and the like. Further, the vehicle external communication connection device 460 may have the function of the above-described road information database 403, and acquire the road information (an example of peripheral vehicle-related information) and transmit the acquired information to the processor 133. Note that the information acquired from the vehicle external communication connection device 460 is not limited to the above-described information.

Software constituent elements stored in the memory 137 include a navigation image generation module 512 (an example of an overhead image generation module 510), a periphery monitoring image generation module 514 (an example of the overhead image generation module 510), a determination module 520, and an image switching module 530.

The navigation image generation module 512 (an example of the overhead image generation module 510) executes, for example, setting the position of a virtual viewpoint MM with respect to a host vehicle position icon PP on a map, which will be described later, and a look-down angle (a depression angle) θ from the virtual viewpoint MM; changing the scale of a course guidance image 200; setting a virtual visual field E which determines the shape of a map around the host vehicle position icon PP to be cut out; and reading map data around the host vehicle from a map database 401, and generating, as the course guidance image, an image observed at a predetermined depression angle and in a predetermined virtual visual field from a predetermined position of the virtual viewpoint MM.

The navigation image generation module 512 disposes, on the basis of the map data and the navigation information, a virtual object for route guidance on a virtual road model at the periphery of the host vehicle 1, and sets a virtual viewpoint position over the host vehicle 1 on the basis of locator information (the position and the angle of the host vehicle 1). Then, the navigation image generation module 512 displays the virtual object viewed from the virtual viewpoint position as an overhead navigation image IM31 (an example of an overhead image IM30) to be described later. The navigation image generation module 512 may be omitted, and the display control device 130 may acquire image data of the overhead navigation image IM31 (an example of the overhead image IM30) from the navigation device 430 or the like via the I/O interface 131.

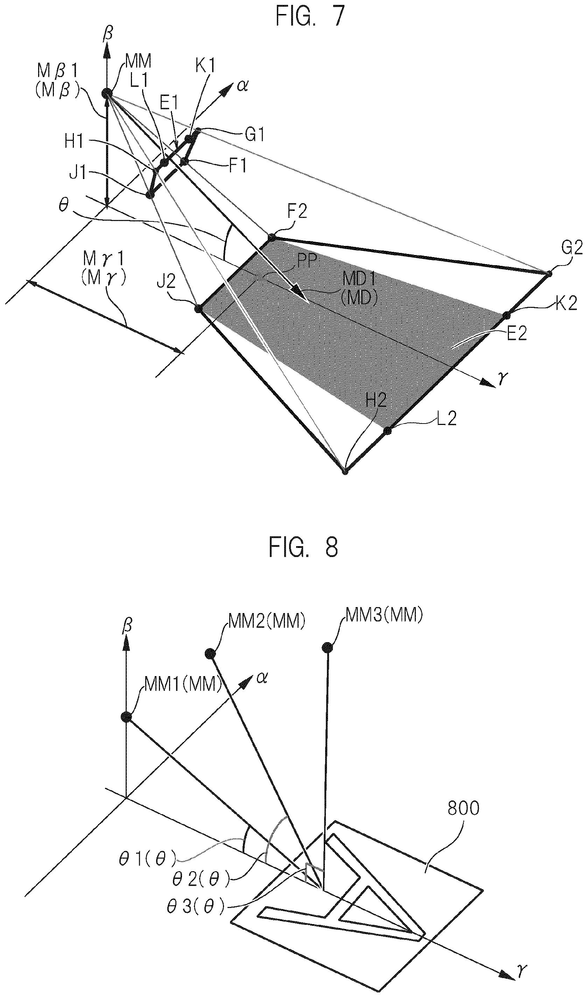

Fig. 7 is a diagram illustrating a region of a map image of the surroundings of the host vehicle displayed as the overhead navigation image IM31. Here, it is assumed that the map is an αγ plane, and the virtual viewpoint position MM for displaying a bird's eye view is at a position of a height Mβ on a β-axis orthogonal to the αγ plane, more specifically, behind and over the host vehicle position icon PP. In the example of Fig. 7, the virtual viewpoint position MM is set at a position separated by Mγ1 in the rear of the host vehicle position icon PP (i.e., in the γ negative direction) and by Mβ1 in the above (i.e., in the β positive direction). As illustrated in Fig. 7, the range of the map surrounded by a rectangular virtual visual field F1G1H1J1 at the look-down angle θ from the virtual viewpoint position MM can be represented as a trapezoid surrounded by reference numerals F2G2H2J2 having a wider range in the left-right direction (α direction) on the far side (i.e., in the γ positive direction) and a narrower range in the left-right direction (α direction) on the near side (in the γ negative direction). In some of the display modes of the present embodiment, the virtual visual field E may have a narrower width in the left-right direction (α direction) in an area overlapping the far area of the map than the rectangular virtual visual field FGHJ. That is, the area of the map surrounded by the virtual visual field E (F1K1L1J1) observed from the virtual viewpoint position MM is surrounded by reference numerals F2K2L2J2, and the range of this area in the left-right direction (α direction) is narrower on the far side (i.e., in the γ positive direction) than the range surrounded by the reference numerals F2G2H2J2.

The navigation image generation module 512 sets the virtual viewpoint position MM at a position separated by Mγ in the rear of the host vehicle position icon PP (i.e., in the γ negative direction) and by Mβ in the above (i.e., in the β positive direction). Therefore, when the host vehicle is traveling straight on a straight traveling road, if the host vehicle position icon PP is viewed from the virtual viewpoint position MM, the overhead navigation image IM31 indicating traveling with the host vehicle position icon PP facing the front is generated. As the virtual viewpoint position MM moves, the map image of the periphery of the host vehicle is rotated (i.e., the angle is changed) and displayed. For example, when the host vehicle position icon PP is rotated by 90 degrees counterclockwise as viewed from directly above by steering of the host vehicle position icon PP, the virtual viewpoint position MM is also rotated by 90 degrees counterclockwise in conjunction with the rotation of the host vehicle position icon PP.

When the scale of the overhead navigation image IM31 is to be increased, the navigation image generation module 512 reduces the distance between the host vehicle position icon PP and the virtual viewpoint position MM. Specifically, at least one of the distance Mγ in the front-rear direction (γ direction) and the height Mβ in the up-down direction (β direction) is reduced so that the distance between the host vehicle position icon PP and the virtual viewpoint position MM is reduced. The navigation image generation module 512 may increase the scale of the overhead navigation image IM31 (may increase the same in a stepwise manner) as the route change point (e.g., a branch road) becomes closer.

The navigation image generation module 512 sets the position Mβ (Mγ) and the angle θ of the virtual viewpoint position MM with respect to the map image. As the navigation image generation module 512 changes the position Mβ (Mγ) and the angle θ of the virtual viewpoint, the navigation image generation module 512 changes the angle (depression angle) with respect to the map image of the surroundings of the host vehicle, which is to be displayed as the overhead navigation image IM31. Typically, the navigation image generation module 512 causes the position of the "virtual viewpoint" to be set at the periphery of the host vehicle (usually at an appropriate place behind the host vehicle). Further, the angle θ of the "virtual viewpoint" is an angle between the αγ plane and a direction passing through the midpoint in a vertical direction of the virtual visual field E1, which will be described later, from the virtual viewpoint position MM, and is hereinafter also referred to as the depression angle.

Fig. 8 is a diagram illustrating the virtual viewpoints MM having different depression angles θ with respect to a predetermined virtual object (content) 800. A virtual viewpoint MM1 has a depression angle θ1, and the depression angle θ1 is, for example, 20 degrees. A virtual viewpoint MM2 has a depression angle θ2 (>θ1), and the depression angle θ2 is, for example, 60 degrees. A virtual viewpoint MM3 has a depression angle θ3 (>θ2), and the depression angle θ3 is, for example, 90 degrees. The virtual object (content) 800 is a navigation image IM30 or a periphery monitoring image (not illustrated). In order to facilitate understanding of the difference in the depression angle θ, the virtual object (content) 800 is denoted as "A" in Fig. 8 and the like.

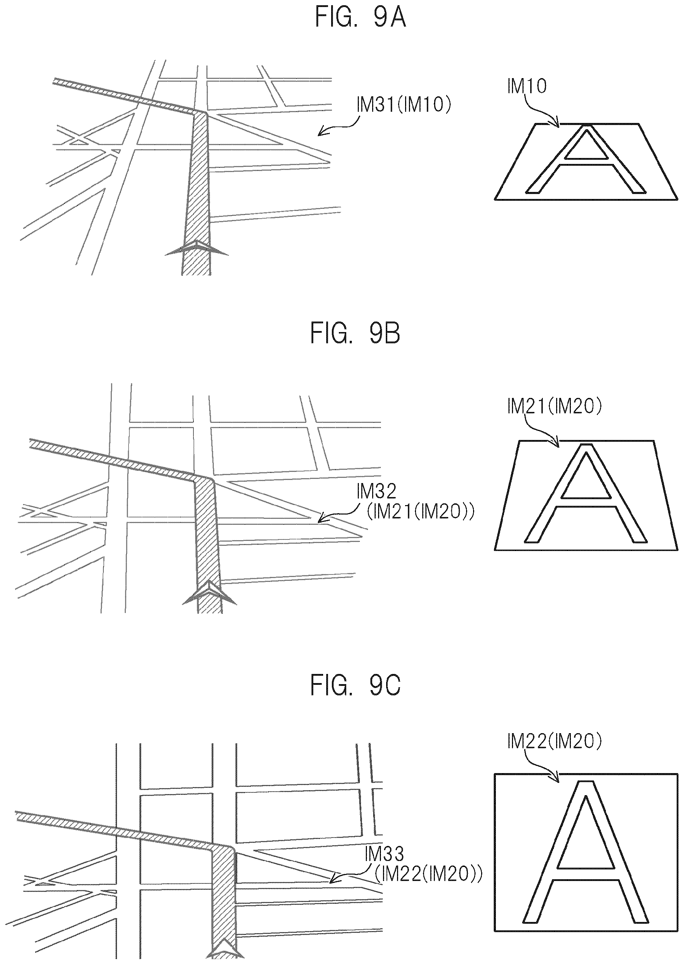

Fig. 9A is a diagram illustrating the virtual object (content) 800 as seen from the virtual viewpoint MM1 (depression angle θ1) of Fig. 8 (the right figure), and the navigation image IM31 (the left figure). Fig. 9B is a diagram illustrating the virtual object (content) 800 as seen from the virtual viewpoint MM2 (depression angle θ2) of Fig. 8 (the right figure), and a navigation image IM32 (the left figure). Fig. 9C is a diagram illustrating the virtual object (content) 800 as seen from the virtual viewpoint MM3 (depression angle θ3) of Fig. 8 (the right figure), and a navigation image IM33 (the left figure). If the navigation image IM31 of Fig. 9A is assumed as the first display image IM10, it can be said that the navigation image IM32 of Fig. 9B or the navigation image IM33 of Fig. 9C, which has a larger depression angle θ than the first display image IM10, is the second display image IM20. That is, the second display image IM20 may include a second display image IM21 in which the depression angle θ is greater than that of the first display image IM10 and smaller than 90 degrees, and a second display image IM22 in which the depression angle θ is 90 degrees that is greater than a depression angle θ of the first display image IM10. The first display image IM10 indicated in Fig. 9A and the second display image IM21 (IM20) indicated in Fig. 9B are images in which the depression angle θ is an acute angle and which represent the content as viewed obliquely downward, and can be assumed as a 3D representation. Meanwhile, the second display image IM22 (IM20) indicated in Fig. 9C is an image in which the depression angle θ is 90 degrees and the virtual viewpoint MM is disposed to be directly opposed to the content, and can be assumed as a 2D representation.

In the display position change processing, the display control device 130 (the processor 133) executes at least one of gradually increasing the depression angle θ when moving the content 800 from the first display unit 110 (the first display region 101) to the second display unit 120 (the second display region 102) and gradually decreasing the depression angle θ when moving the content from the second display unit 120 (the second display region 102) to the first display unit 110 (the first display region 101). In the display control device 130 according to the present embodiment, while gradually increasing the depression angle θ, the content 800 which has been displayed on the first display unit 110 is moved toward the predetermined second fixed position 107 in the second display unit 120 where the image distance ID0 is short. Consequently, it is possible to assume an advantage of being able to give the impression that the content 800 has come close to the near side in an emphasized way. Also, in the display control device 130 according to the present embodiment, while gradually decreasing the depression angle θ, the content 800 which has been displayed on the second display unit 120 is moved toward the predetermined first fixed position 106 in the first display unit 110 where the image distance ID0 is long. Consequently, it is possible to assume an advantage of being able to give the impression that the content 800 has moved away to the far side in an emphasized way.

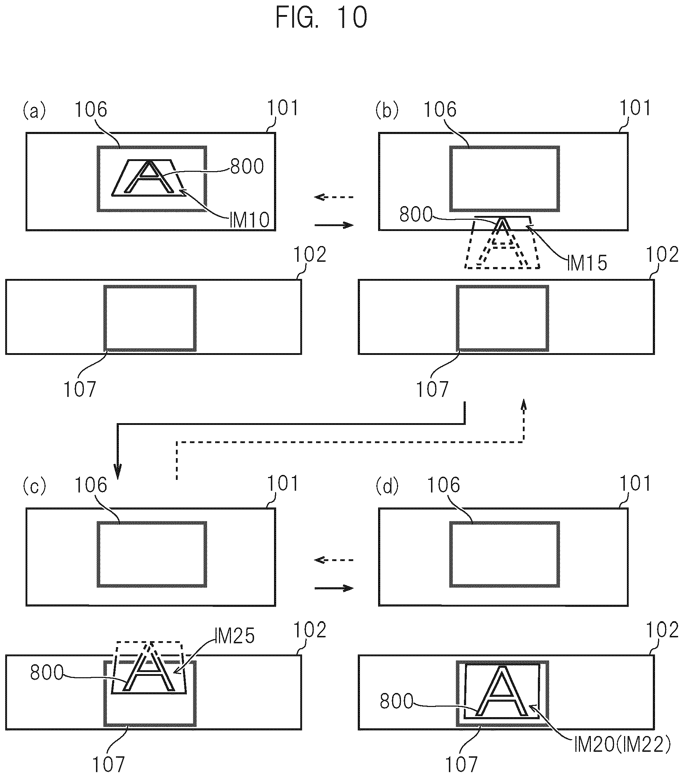

Fig. 10 is a diagram illustrating one embodiment of transition of a display image in the display position change processing executed by the display control device 130. In the order of (a), (b), (c), and (d) of Fig. 10, the display control device 130 moves the virtual object (content) 800 from the first display region 101 (the first fixed position 106) to the second display region 102 (the second fixed position 107) while gradually increasing the depression angle θ. Conversely, in the order of (d), (c), (b), and (a) of Fig. 10, the display control device 130 moves the virtual object (content) 800 from the second display region 102 (the second fixed position 107) to the first display region 101 (the first fixed position 106) while gradually decreasing the depression angle θ. In (a) of Fig. 10, the virtual object 800 is displayed as the first display image IM10 at the first fixed position 106. When a condition for performing the display position change processing is satisfied, the display control device 130 moves the first display image IM10 which has been displayed at the first fixed position 106 toward the second display region 102 (the second fixed position 107). A first transition image IM15 (in which a solid line portion is displayed and a dotted line portion is not displayed) in (b) of Fig. 10 is moving inside the first display region 101 from the first fixed position 106 toward the second fixed position 107, and the depression angle θ is set to be greater than that of the first display image IM10 in (a) of Fig. 10. A second transition image IM25 (in which a solid line portion is displayed and a dotted line portion is not displayed) in (c) of Fig. 10 is moving inside the second display region 102 from the first fixed position 106 toward the second fixed position 107, and the depression angle θ is set to be greater than that of the first transition image IM15 in (b) of Fig. 10. As regards the second display image IM20 in (d) of Fig. 10, the movement from the first fixed position 106 toward the second fixed position 107 is completed, and the second display image IM20 is positioned at the second fixed position 107 and the depression angle θ is set to be greater than that of the first transition image IM15 in (b) of Fig. 10.

In the display control device 130 according to some embodiments, the processor 133 gradually changes, at the movement source, the depression angle θ in the display position change processing. The observer 4 can predict that the display position of the content 800 will be changed, and also the next display position (a movement destination) of the content 800 from the change in the depression angle θ. In the present embodiment, when the display position change processing is started, a change of the depression angle θ is started early within the display region of the movement source. Thus, it is possible to predict the next display position (the movement destination) of the content 800 at an early timing.

In the display control device 130 according to some embodiments, in the display position change processing, the processor 133 gradually changes, at the movement source, the depression angle θ while moving the content 800 to the movement destination side. In the present display control device 130, for example, as indicated in Fig. 10, the content 800, which has been displayed on the first display unit 110, moves toward the second display unit 120 where the image distance ID0 is short with the depression angle θ being gradually increased, and is finally displayed at the predetermined second fixed position 107 in the second display unit 120 where the image distance ID0 is short. Therefore, it is possible to assume an advantage of being able to give the impression that the content 800 has come close to the near side in an emphasized way even when the content 800 is in the process of making a move on the first display unit 110. Further, in the display control device 130 according to the present embodiment, the content 800, which has been displayed on the second display unit 120, moves toward the first display unit 110 where the image distance ID0 is long with the depression angle θ being gradually decreased, and is finally displayed at the predetermined first fixed position 106 in the first display unit 110 where the image distance ID0 is long. Therefore, it is possible to assume an advantage of being able to give the impression that the content 800 is moving away to the far side in an emphasized way even when the content 800 is in the process of making a move on the second display unit 120. Note that the display is not limited to the above, and in the display position change processing, the processor 133 according to some embodiments may gradually change the depression angle θ of the content 800 at the movement source, and thereafter, stop the display of the content 800 at the movement source (for example, perform slide out, fade out, or a combination thereof).

**In** the display control device 130 according to some embodiments, at the movement destination, while the processor 133 allows the content 800 to be moved from the movement source side, the processor 133 does not change the depression angle θ in the display position change processing. In a display device according to the present embodiment, by virtue of the change in the depression angle θ and the movement of the display position of the content 800 at the movement source, it is possible to give the impression that the image distance ID0 of the content 800 is changing in an emphasized way, and it is also possible to make an impression of there being a change in the depression angle θ of the content 800 in an emphasized way. For this reason, a change of the depression angle of the content at the movement destination is not necessarily required. Therefore, in the present display control device, it is possible to assume an advantage of being able to reduce a change of the depression angle θ at the movement destination, which may be a redundant expression at the movement source, and reduce a control load. Note that the display is not limited to the above, and in the processor 133 according to some embodiments, the processor 133 may, in the display position change processing, move the content 800 from the movement source side and also change the depression angle θ at the movement destination.

Further, in the display control device 130 according to some embodiments, in the display position change processing, if the size of the content 800 at the movement destination is smaller than the size of the content 800 at the movement source, the processor 133 reduces the content at the movement source. Further, if the size of the content 800 at the movement destination is larger than the size of the content 800 at the movement source, the processor 133 enlarges the content 800 at the movement source. In a case where the size of the content 800 differs greatly between the movement source and the movement destination, a large difference is caused in the size of the content 800 to be visually recognized when the display unit on which the content 800 is displayed is switched. Thus, it is presumed that the switched content is hard to be recognized as being the same content. In the display control device 130 according to the present embodiment, the size of the content 800 is enlarged or reduced at the movement source such that the size becomes close to that of the content at the movement destination. By such enlargement or reduction, it is possible to assume an advantage of eliminating (or reducing) a difference in the size of the content to be visually recognized which is presumed to occur at the time when the display unit on which the content 800 is displayed is switched.

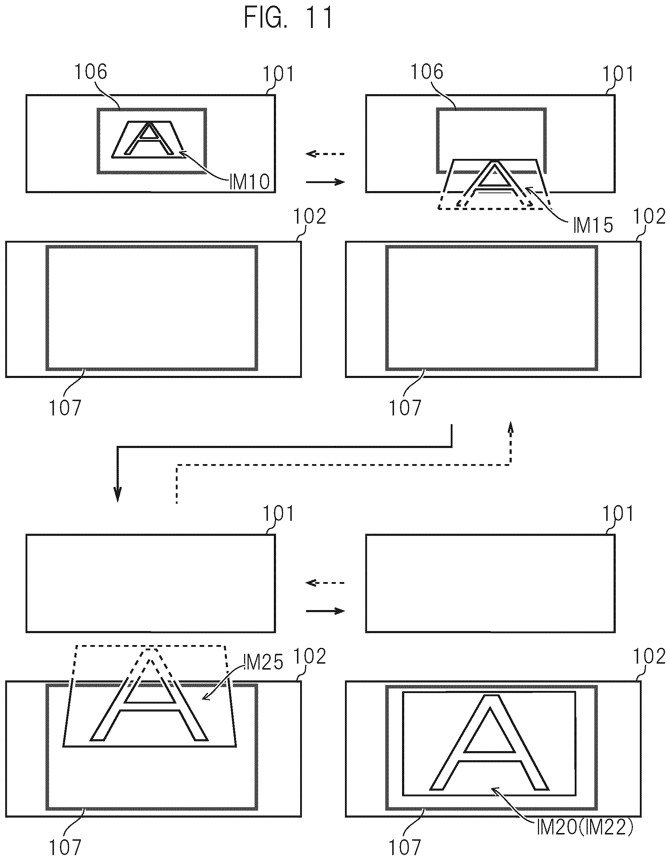

Fig. 11 is a diagram illustrating one embodiment of transition of a display image in the display position change processing executed by the display control device 130. In the order of (a), (b), (c), and (d) of Fig. 11, the display control device 130 moves the virtual object (content) 800 from the first display region 101 (the first fixed position 106) to the second display region 102 (the second fixed position 107) while enlarging the virtual object (content) 800. Conversely, in the order of (d), (c), (b), and (a) of Fig. 11, the display control device 130 moves the virtual object (content) 800 from the second display region 102 (the second fixed position 107) to the first display region 101 (the first fixed position 106) while reducing the virtual object (content) 800. In (a) of Fig. 11, the virtual object 800 is displayed as the first display image IM10 at the first fixed position 106. When a condition for performing the display position change processing is satisfied, the display control device 130 moves the first display image IM10 which has been displayed at the first fixed position 106 toward the second display region 102 (the second fixed position 107). The first transition image IM15 (in which a solid line portion is displayed and a dotted line portion is not displayed) in (b) of Fig. 11 is moving inside the first display region 101 from the first fixed position 106 toward the second fixed position 107, and is set such that the depression angle θ and also the size are greater than those of the first display image IM10 in (a) of Fig. 11. The second transition image IM25 (in which a solid line portion is displayed and a dotted line portion is not displayed) in (c) of Fig. 11 is moving inside the second display region 102 from the first fixed position 106 toward the second fixed position 107, and is set such that the depression angle θ and also the size are greater than those of the first transition image IM15 in (b) of Fig. 11. As regards the second display image IM20 in (d) of Fig. 11, the movement from the first fixed position 106 toward the second fixed position 107 is completed, and the second display image IM20 is positioned at the second fixed position 107 and the depression angle θ is set to be greater than that of the first transition image IM15 in (b) of Fig. 11 (the size is substantially the same).

In addition, in the display control device 130 according to some embodiments, in the display position change processing, the processor 133 changes, at the movement source, the content 800 in a form which becomes gradually invisible from an end portion of the content 800 on the movement destination side. In the display control device according to the present embodiment, by changing the content in a form which becomes gradually invisible from the end portion of the content on the movement destination side in a state in which the content is stopped (is not moving), it is also possible to assume an advantage of being able to cause the observer to perceive that the content has moved to the movement destination even without moving the content. Further, in the display control device according to the seventh embodiment, with the content moving toward the movement destination, by changing the content in a form which becomes gradually invisible from the end portion of the content on the movement destination side, it is also possible to assume an advantage of being able to cause the observer to perceive that the content is moving in an emphasized way.

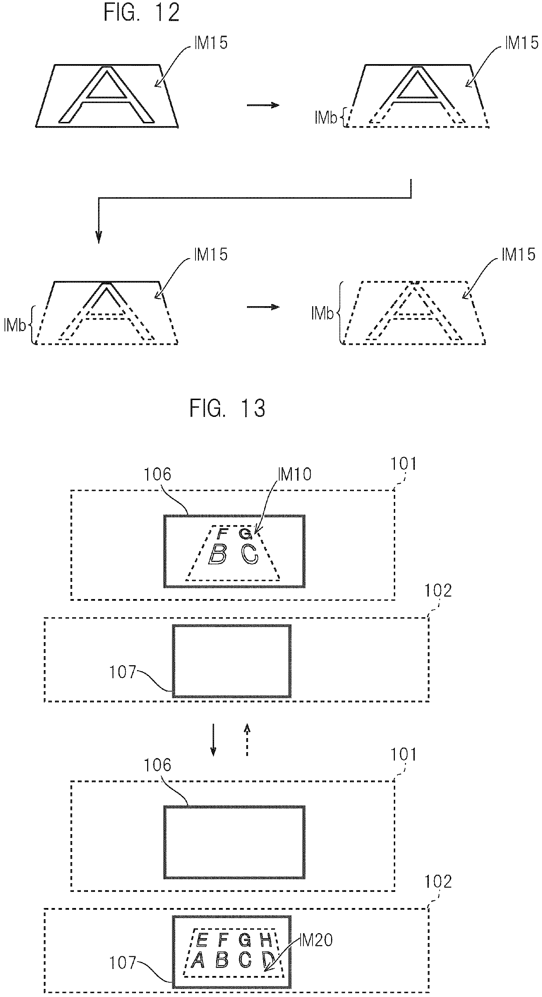

Fig. 12 is a diagram for describing display transition of the content. In Fig. 12, given that the lower side corresponds to the movement destination (the second display region 102), the first transition image IM15 is gradually changed to be in a state of being invisible (i.e., the state in which a dotted line portion is invisible) from an end portion (a lower end) of the first transition image IM15 that is close to the movement destination (the second display region 102) to an end portion (an upper end) of the same on the opposite side. In other words, the content 800 is made to fade out from the end portion on the movement destination side. Although not illustrated, in the case of the second transition image IM25, since the upper side corresponds to the movement destination (the first display region 101), an invisible region is gradually increased from an end portion (an upper end) of the second transition image IM25 that is close to the movement destination (the first display region 101).

Further, in the display control device 130 according to some embodiments, the content included in the first display image IM10 is a part of the content included in the second display image IM20. When a display position of the content 800 is switched between the first display region 101 and the second display region 102, the display control device 130 according to the present embodiment increases or decreases the amount of information of the content 800. By doing so, it is possible to adjust the amount of information and attractiveness of an image, and it is assumed that the convenience is enhanced.

Fig. 13 is a diagram illustrating a display mode of the first display image IM10 (upper diagram) and the second display image IM20 (lower diagram). When the content items included in the second display image IM20 are "A to H", the display control device 130 may perform display control such that the first display image IM10 includes a part of the content items ("B, C, F, G") that are included in the second display image IM20 but does not include a part of the same ("A, D, E, H").

Further, in the display control device 130 according to some embodiments, the first display image IM10 has a predetermined first depth representation, and the second display image IM20 does not have the first depth representation. The display control device 130 according to the present embodiment switches a method of representation between the first display image IM10 having the first depth representation and the second display image IM20 not having the first depth representation, whereby a change in the depression angle θ with respect to the content 800 is further emphasized. It is possible to make an impression of there being a difference between the distances (image distances) ID0, which are displayed by such an emphasis on the change in the depression angle θ, in an emphasized way. The first depth representation is a representation which reduces the sharpness of the content on the back side.

Examples of the mode of the first depth representation include the following: (1) In the first depth representation, the back side is displayed light and the near side is displayed dark. (2) In the first depth representation, a contour line or shade is made thin on the back side, and the same is made thick on the near side. (3) In the first depth representation, the closer to the back side, the lower the saturation is made, and the closer to the near side, the higher the saturation is made (however, depending on the hue of the background or the like, the opposite case is also possible). (4) In the first depth representation, the brightness (luminance) on the back side is made low, and the same on the near side is made high (however, depending on the luminance or the brightness of the background, the opposite case is also possible). (5) In the first depth representation, the contrast ratio to the background is made low on the back side, and the same on the near side is made high (however, depending on the color or the color tone, etc., of the background, the opposite case is also possible).

As the display control device 130 (the processor 133) executes the determination module 520, the display control device 130 (the processor 133) determines whether a first condition for switching the display position (moving the display position) of the content 800 from the first display unit 110 (the first display region 101) to the second display unit 120 (the second display region 102) is satisfied or a second condition for switching the display position (moving the display position) of the content 800 from the second display unit 120 (the second display region 102) to the first display unit 110 (the first display region 101) is satisfied.

Examples of the first condition include the following: (1) The first display image IM10 is a menu content selected by an operation of the observer 4, and a specific operation is detected by the observer 4 on the menu content. (2) A decrease in a degree of priority of displaying the first display image IM10 is detected. (3) A situation in which a line of sight of the observer 4 is desired to be guided to the second display region 102 is detected. (4) It is determined that the information of the first display image IM10 is unsuitable for the front scenery 300. (5) Other information to be displayed in the first display region 101 is detected. (6) A condition for ending the display by the first display unit 110 is satisfied. Note that the first condition is not limited to the above.

Examples of the second condition include the following: (1) An increase in a degree of priority of displaying the content 800 is detected. (2) A situation in which a line of sight of the observer 4 is desired to be guided to the first display region 101 is detected. (3) It is determined that a situation in which the content 800 should be displayed together with the front scenery 300 has occurred. (4) It is determined that a situation in which the observer 4 should be alerted has occurred. Note that the second condition is not limited to the above.

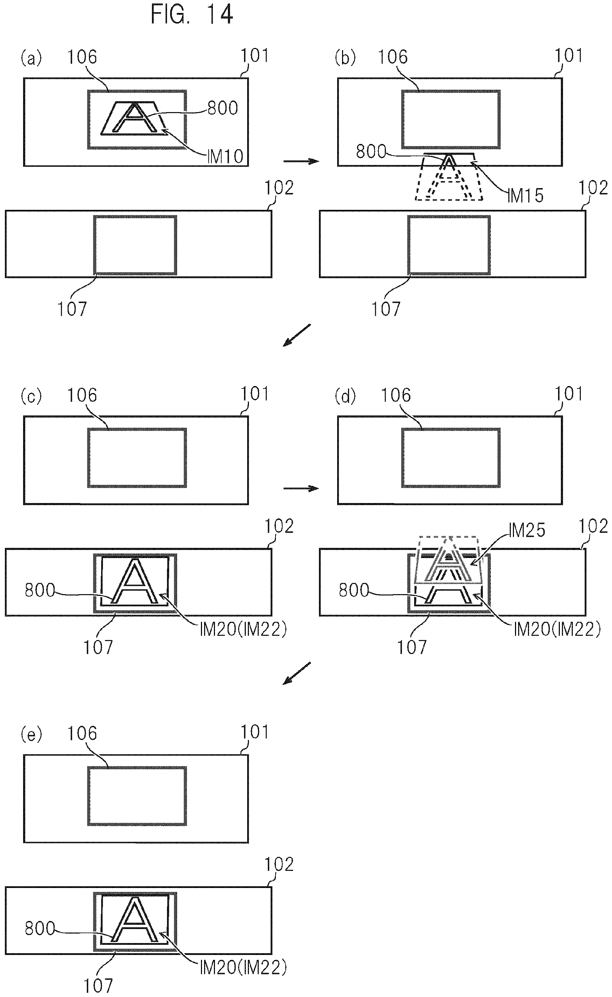

Fig. 14 is a diagram illustrating one embodiment of transition of a display image in the display position change processing executed by the display control device 130. In the order of (a), (b), (c), (d), and (e) of Fig. 14, the display control device 130 moves the virtual object (content) 800 from the first display region 101 (the first fixed position 106) to the second display region 102 (the second fixed position 107). Conversely, in the order of (e), (d), (c), (b), and (a) of Fig. 14, the display control device 130 moves the virtual object (content) 800 from the second display region 102 (the second fixed position 107) to the first display region 101 (the first fixed position 106). In (a) of Fig. 14, the virtual object 800 is displayed as the first display image IM10 at the first fixed position 106. When a condition for performing the display position change processing is satisfied, the display control device 130 moves the first display image IM10 which has been displayed at the first fixed position 106 toward the second display region 102 (the second fixed position 107). The first transition image IM15 (in which a solid line portion is displayed and a dotted line portion is not displayed) in (b) of Fig. 14 is moving inside the first display region 101 from the first fixed position 106 toward the second fixed position 107, and the depression angle θ is set to be greater than that of the first display image IM10 in (a) of Fig. 14. In (c) of Fig. 14, the second display image IM20 is displayed in the second display region 102 (the second fixed position 107). The second transition image IM25 (in which a solid line portion is displayed and a dotted line portion is not displayed) in (d) of Fig. 14 is moving inside the second display region 102 from the first fixed position 106 toward the second fixed position 107, and the depression angle θ is set to be greater than that of the first transition image IM15 in (b) of Fig. 14. The second transition image IM25 in (d) of Fig. 14 is gradually made close to the second display image IM20, and then fades out. The second transition image IM25 in (d) of Fig. 14 may be gradually made close to the second display image IM20 and gradually made to have a depression angle θ close to that of the second display image IM20, and then may fade out. The second display image IM20 in (e) of Fig. 14 is the image displayed in (c) of Fig. 14 being displayed as it is when the second transition image IM25 in (d) of Fig. 14 has faded out.

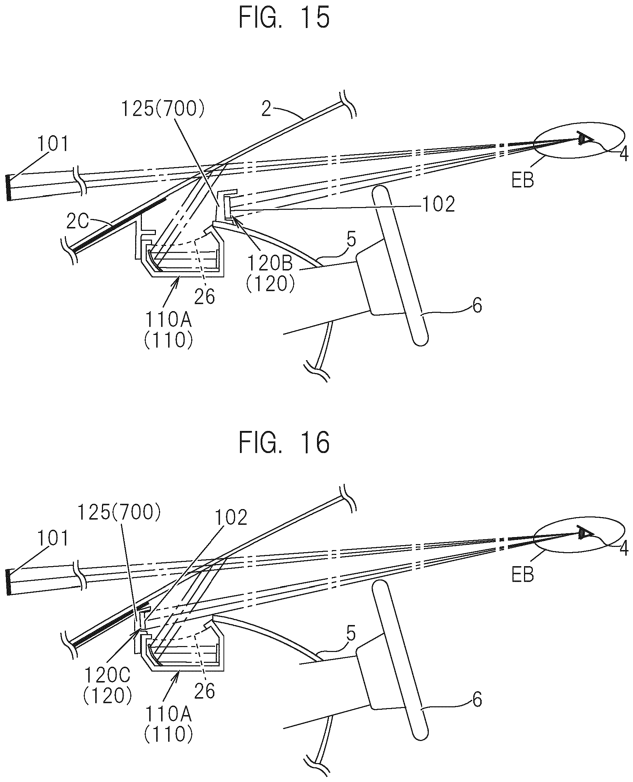

Also, in some of the vehicular display systems 10, the second display unit 120 may be a display panel provided between the dashboard 5 and the front windshield 2. A second display unit 120B of Fig. 15 is a display panel which is provided on the dashboard 5 closer to the driver 4 than a light transmission portion 26 of a head-up display device 120A and whose back surface is held by a light-shielding portion 125. When viewed from the center of the eyebox EB of the head-up display device 20A, the second display region 102 where the second display unit 120D of Fig. 15 displays the second display image IM20 is disposed in the region (front scenery non-overlapping region) 700 that does not overlap the actual view beyond the front windshield 2.

Further, as illustrated in Fig. 16, the second display unit 120 is a display panel which is provided on the dashboard 5 further to the back side (i.e., at a position distant from the driver 4) than the light transmission portion 26 of a head-up display device 20A and whose back surface is held by the light-shielding portion 125. When viewed from the center of the eyebox EB of the head-up display device 20A, the second display region 102 where a second display unit 120C of Fig. 16 displays the second display image IM20 is disposed in the region (front scenery non-overlapping region) 700 that does not overlap the actual view beyond the front windshield 2.

The operations of the above-described processing processes may be implemented by executing one or more functional modules of an information processing apparatus, such as a general-purpose processor or an application-specific chip. These modules, combinations of these modules, and/or combinations with known hardware that may replace such functions are all included in the scope of protection of the present invention.

The functional blocks of the vehicular display system 10 are executed arbitrarily and selectively by hardware, software, or a combination of the hardware and the software to put into practice the principles of the various embodiments described. It will be understood by those skilled in the art that the functional blocks described in Fig. 2 may be arbitrarily and selectively combined or that one functional block may be separated as two or more sub-blocks to implement the principles of the embodiments described. Therefore, the descriptions of the present specification arbitrarily and selectively support any possible combination or division of the functional blocks described herein.

### DESCRIPTION OF REFERENCE NUMERALS

1 Vehicle
2 Front windshield
2C W/S light-shielding portion
3 Observer
4 Observer
5 Dashboard
6 Road surface
10 Vehicular display system
11A Display light
12 First image generation unit
12A Display
13ARelay optical system
21ADisplay light
22 Second image generation unit 22A Display
30 Display control device
101 First display region
102 Second display region
106 First fixed position
107 Second fixed position
110A HUD device (first display unit)
110B HMD device (first display unit)
120ANearby HUD device (second display unit)
130 Display control device
131 I/O interface
133 Processor
135 Image processing circuit
137 Memory
200 Course guidance image
300 Front scenery
310 Road surface
401 Map database
403 Road information database
410 Locator
411 GNSS device
420 Map information storage device
430 Navigation device
440 Periphery monitoring sensor
450 Viewer detection device
460 Vehicle external communication connection device
510 Overhead image generation module
512 Navigation image generation module
514 Periphery monitoring image generation module
520 Determination module
530 Image switching module
600 Front scenery overlapping region
700 Front scenery non-overlapping region (light-shielding portion)
800 Virtual object (content)
E Virtual visual field
ID0 Image distance
ID1 Image distance
ID1 First image distance
IM10 First display image
IM15 First transition image
IM20 Second display image
IM25 Second transition image
IM30 Navigation image (overhead image)
MM Virtual viewpoint
MM1 Virtual viewpoint
MM2 Virtual viewpoint
MM3 Virtual viewpoint
Mβ Height
Mγ Distance
PP Host vehicle position icon
θ Depression angle
θ1 Depression angle
θ2 Depression angle
θ3 Depression angle

## Claims

1. A display control device which controls a vehicular display system comprising a first display unit which displays an image in a first display region, and a second display unit which displays an image in a second display region disposed nearer than the first display region, in which:
a processor executes display position change processing of moving predetermined content between the first display region and the second display region;
the first display unit displays a first display image, which is an overhead image of the content as viewed obliquely downward; and
the second display unit displays a second display image in which a depression angle is greater than a depression angle of the first display image.

2. The display control device according to claim 1, wherein the processor executes, in the display position change processing, at least one of:
gradually increasing the depression angle when moving the content from the first display region to the second display region; and
gradually decreasing the depression angle when moving the content from the second display region to the first display region.

3. The display control device according to claim 2, wherein the processor gradually changes, at a movement source, the depression angle in the display position change processing.

4. The display control device according to claim 3, wherein in the display position change processing, the processor gradually changes, at the movement source, the depression angle while moving the content to a movement destination side.

5. The display control device according to claim 3, wherein at the movement destination, while the processor allows the content to be moved from a movement source side, the processor does not change the depression angle in the display position change processing.

6. The display control device according to claim 1, wherein the processor executes, in the display position change processing, at least one of:
reducing the content at a movement source if a size of the content at a movement destination is smaller than a size of the content at the movement source; and
enlarging the content at the movement source if the size of the content at the movement destination is larger than the size of the content at the movement source.

7. The display control device according to claim 1, wherein in the display position change processing, the processor changes, at a movement source, the content in a form which becomes gradually invisible from an end portion of the content on a movement destination side.

8. The display control device according to claim 1, wherein the content included in the first display image is a part of the content included in the second display image.

9. The display control device according to claim 1, wherein:
the first display image is a 3D representation; and
the second display image is a 2D representation.

10. The display control device according to claim 1, wherein:
the first display image has a predetermined first depth representation; and
the second display image does not have the first depth representation.

11. A head-up display device in which the first display unit comprises:
the display control device according to claim 1;
a display which emits display light; and
a relay optical system which directs the display light from the display toward a projected portion, the head-up display device displaying a virtual image in the first display region, wherein
an upper end of the first display region as seen from an observer is farther than a lower end thereof.

12. A display method of controlling a vehicular display system comprising a first display unit which displays an image in a first display region, and a second display unit which displays an image in a second display region disposed nearer than the first display region, the display control method comprising:
executing display position change processing of moving predetermined content between the first display region and the second display region;
causing the first display unit to display a first display image, which is an overhead image of the content as viewed obliquely downward; and
causing the second display unit to display a second display image in which a depression angle is greater than a depression angle of the first display image.
